(19) Europäisches Patentamt
European Patent Office
Office européen des brevets

(11) EP 4 144 073 B1

(12) EUROPEAN PATENT SPECIFICATION

(45) Date of publication and mention of the grant of the patent:
**10.06.2026 Bulletin 2026/24**

(21) Application number: **21715866.6**

(22) Date of filing: **26.03.2021**

(51) International Patent Classification (IPC):
***H04L 45/24*** *(2022.01)* ***H04L 45/28*** *(2022.01)*
***H04L 45/00*** *(2022.01)*

(52) Cooperative Patent Classification (CPC):
**H04L 45/22; H04L 45/28; H04L 45/70**

(86) International application number:
**PCT/EP2021/057905**

(87) International publication number:
**WO 2022/199827 (29.09.2022 Gazette 2022/39)**

# (54) DEVICES AND METHODS PROVIDING A FAST FAILOVER MECHANISM FOR ROUTING DATA IN COMMUNICATION NETWORKS

VORRICHTUNGEN UND VERFAHREN ZUR BEREITSTELLUNG EINES SCHNELLEN AUSFALLSICHERUNGSMECHANISMUS ZUR LEITWEGLENKUNG VON DATEN IN KOMMUNIKATIONSNETZEN

DISPOSITIFS ET PROCÉDÉS FOURNISSANT UN MÉCANISME DE BASCULEMENT RAPIDE POUR ACHEMINER DES DONNÉES DANS DES RÉSEAUX DE COMMUNICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**08.03.2023 Bulletin 2023/10**

(73) Proprietor: **Huawei Technologies Co., Ltd.**
**Shenzhen, Guangdong 518129 (CN)**

(72) Inventors:
- **MARTIN, Sebastien**
**80992 Munich (DE)**
- **LEGUAY, Jeremie**
**80992 Munich (DE)**
- **MEDAGLIANI, Paolo**
**80992 Munich (DE)**
- **FRESSANCOURT, Antoine**
**80992 Munich (DE)**

(74) Representative: **Grünecker Patent- und Rechtsanwälte**
**PartG mbB**
**Leopoldstraße 4**
**80802 München (DE)**

(56) References cited:
**EP-A1- 3 598 348**
**US-A1- 2003 204 587**
**US-A1- 2012 044 801**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 144 073 B1

## Description

### TECHNICAL FIELD

The present disclosure relates to communication networks in general. More specifically, the present disclosure relates to devices and methods for routing data packets in a communication network from a source network node to a destination network node and providing a fast failover mechanism for path degradation.

### BACKGROUND

Routing, and its optimization, plays an important role in satisfying end-to-end quality of service (QoS) requirements for demanding applications such as real-time multimedia communication, online gaming or industrial machine remote control. In real-time multimedia communications, the perceived quality of an end-to-end communication between a source node and a destination node of a communication network heavily depends on the capability of the network to ensure a timely and in-order delivery of the data packets carrying the live content of the communication. Packet losses and high jitter deteriorate the perceived voice and video quality, resulting in glitches in the communication. In online games, as players interact in real time, systems sustaining the collaboration of several players within a game struggle to maintain a low latency for every player in order to keep the interactions fluid and avoid giving some players a competitive advantage. In industrial machine remote control, the capacity to provide a low latency, no jitter communication link is a promise of 5G communication networks, and will trigger future use cases aiming at reducing the exposure of some skilled workers to potentially hazardous environments. US 2012/0044801 A1 relates to computer networks and in particular to dynamically determining whether to re-establish a Fast Rerouted primary tunnel based on path quality feedback of a utilized backup tunnel in a computer network. US 2003/02044587 A1 relates to mobile ad hoc wireless networks and related methods. EP 3 598 348 A1 relates to methods and apparatus for adaptively detecting signal degradation in an optical communication system using pre-forward error correction (pre-FEC) bit error rate (BER).

The previously mentioned use cases demonstrate the need for communication networks to deliver high-quality end-to-end communications. Besides, those use cases show that QoS metrics or other performance measures to monitor and control can differ depending on the situation. Sometimes, it is crucial to keep jitter as low as possible, while sometimes packet loss is a more important performance measure.

Given the fact that Internet Protocol (IP) based communication networks are based on a best-effort approach, the QoS can vary quite a lot depending on the actual network load, the utilization of the links, the burstiness of traffic, etc. To that extent, ensuring a high level of QoS requires a tight monitoring of the network's performance according to the QoS metrics and a quick reaction in the event of a degradation of the QoS metric or another performance measure with respect to specific application requirements.

Given the importance of ensuring the proper operation of QoS-dependent connectivity services, several approaches have been suggested and studied to monitor network QoS and to react to a degradation of a QoS metric or another network performance measure. Those known approaches can be classified into three main categories, namely source-based approaches, centralized approaches, and approaches using a path error signalling mechanism.

In source-based approaches, the source is responsible for rerouting the packets on another path if a degradation is reported. As the source is the only node that can actively reroute the traffic, it results in quite a slow reaction to a degradation of a QoS metric of the communication network.

In centralized approaches, an external, centralized controller is monitoring the QoS metric of communication paths by using a postcard-based monitoring solution, and triggers a rerouting in case of performance degradation. The reaction to a path degradation is even slower with those mechanisms than with source-based approaches because the controller is remote, potentially quite distant from the systems it monitors.

In approaches using a path error signalling mechanism, additional signalling mechanisms are usually employed for triggering the rerouting of packets across the network in case of a path failure.

In light of the above, there is a need for improved devices and methods for routing data packets in a communication network from a source network node to a destination network node and providing a fast failover mechanism in case of a path degradation.

### SUMMARY

The present invention is defined by the independent claims. Further embodiments are set forth in the dependent claims.

Details of one or more embodiments are set forth in the accompanying drawings and the description below. Other features, objects, and advantages will be apparent from the description, drawings, and claims.

### BRIEF DESCRIPTION OF THE DRAWINGS

In the following, embodiments of the present disclosure are described in more detail with reference to the attached figures and drawings, in which:

Fig. 1 shows a schematic diagram illustrating a communication network including a plurality of network nodes according to an embodiment;

Fig. 2 shows a schematic diagram illustrating processing stages implemented by the plurality of network nodes of figure 1;

Fig. 3 shows a signalling diagram illustrating a message exchange including a path creation message between the plurality of network nodes of figure 1;

Fig. 4 shows a signalling diagram illustrating a further message exchange including a path degradation message between the plurality of network nodes of figure 1;

Fig. 5 shows a signalling diagram illustrating a further message exchange including a path under investigation message between the plurality of network nodes of figure 1;

Fig. 6 shows a signalling diagram illustrating a further message exchange including an extended path creation message between the plurality of network nodes of figure 1;

Fig. 7 shows a schematic diagram illustrating a format of a path creation message generated by a network node according to an embodiment;

Fig. 8 shows a schematic diagram illustrating a format of a path degradation message generated by a network node according to an embodiment; and

Fig. 9 shows a flow diagram illustrating a method of operating a network node according to an embodiment.

In the following, identical reference signs refer to identical or at least functionally equivalent features.

## DETAILED DESCRIPTION OF THE EMBODIMENTS

In the following description, reference is made to the accompanying figures, which form part of the disclosure, and which show, by way of illustration, specific aspects of embodiments of the present disclosure or specific aspects in which embodiments of the present disclosure may be used. It is understood that embodiments of the present disclosure may be used in other aspects and comprise structural or logical changes not depicted in the figures. The following detailed description, therefore, is not to be taken in a limiting sense, and the scope of the present disclosure is defined by the appended claims.

For instance, it is to be understood that a disclosure in connection with a described method may also hold true for a corresponding device or system configured to perform the method and vice versa. For example, if one or a plurality of specific method steps are described, a corresponding device may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary embodiments and/or aspects described herein may be combined with each other, unless specifically noted otherwise.

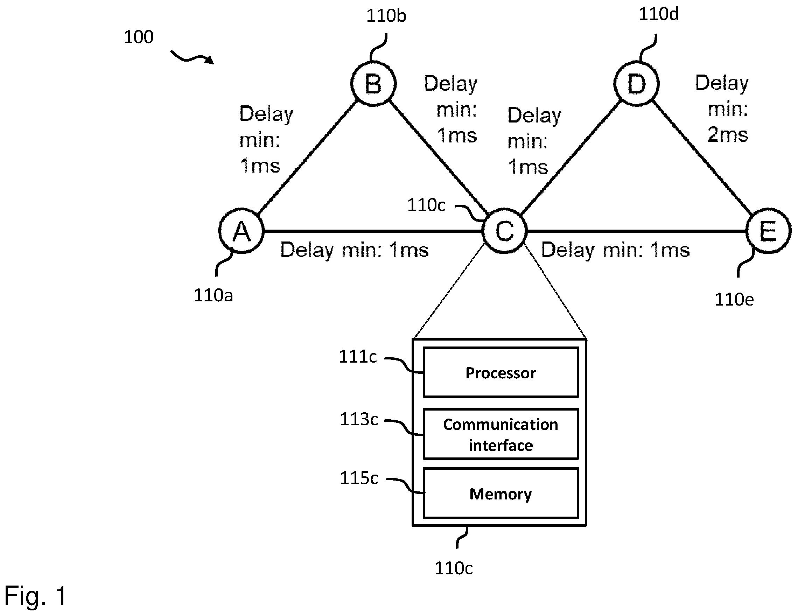

Figure 1 shows a schematic diagram illustrating a communication network 100 including a plurality of network nodes 110a-e according to an embodiment for routing data packets along a communication path from a source network node 110a to a destination network node 110e of the plurality of network nodes 110a-e of the communication network 100. In an embodiment, the communication network 100 may be an IP-based communication network 100 and the plurality of network nodes 110a-e may comprise one or more routers 110a-e. In the following embodiments will be described with respect to the exemplary network node 110c. As will be appreciated, however, any of the other network nodes, such the network node B or the network node D, may have the same functionality.

As illustrated in figure 1, the exemplary network node 110c comprises a communication interface 113c configured to receive one or more data packets from the further network node 110b upstream of the network node 110b along the exemplary communication path A-B-C. The exemplary network node 110c further comprises a processing circuitry 111c configured to estimate, based on the one or more data packets, at least one performance measure, i.e. at least one QoS metric of the exemplary communication path A-B-C from the source network node 110a to the network node 110c. Further embodiments of estimating, based on the one or more data packets, the at least one performance measure, i.e. the at least one QoS metric of the exemplary communication path A-B-C from the source network node 110a to the network node 110c will be described below.

The processing circuitry 111c of the exemplary network node 110c may be implemented in hardware and/or software. The hardware may comprise digital circuitry, or both analog and digital circuitry. Digital circuitry may comprise components such as application-specific integrated circuits (ASICs), field-programmable arrays (FPGAs), digital signal processors (DSPs), or general-purpose processors. As illustrated in figure 1, the exemplary network node 110c may further comprise a non-transitory memory 115c configured to store data and executable program code which, when executed by the processing circuitry 111c causes the exemplary network node 110c to perform the functions, operations and methods described herein.

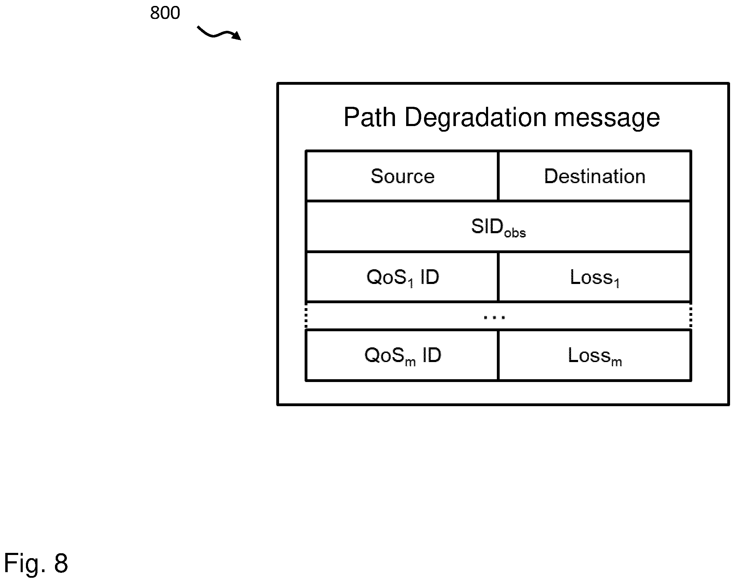

The communication interface 113c of the network node 110c is further configured to send a path degradation message 800, which will be described in more detail below in the context of figure 8, to the further upstream network node 110b and possibly further upstream network nodes, including the source network node 110a, in case a degradation of the at least one performance measure, i.e. the at least one QoS metric of the communication path exceeds or is bound to exceed an allowed tolerance range. As will be described in more detail below, in an embodiment, this path degradation message 800 may trigger the further upstream network node 110b (or possibly further upstream network nodes) to determine an alternative communication path for routing one or more further data packets to the destination network node 110e.

Thus, the plurality of network nodes 110a-e provide a fast failover mechanism in case of degradation of a QoS metric over a communication path within the communication network 100. This allows ensuring that the data packets belonging to a given network flow meet SLA (service level agreement) requirements associated with the needs of the application it serves. As described above, a local reparation of the communication path may be performed by intermediate nodes, such as the network nodes 110b, 110c, located on the communication path in order to speed up the QoS failover reaction and to maximize stability.

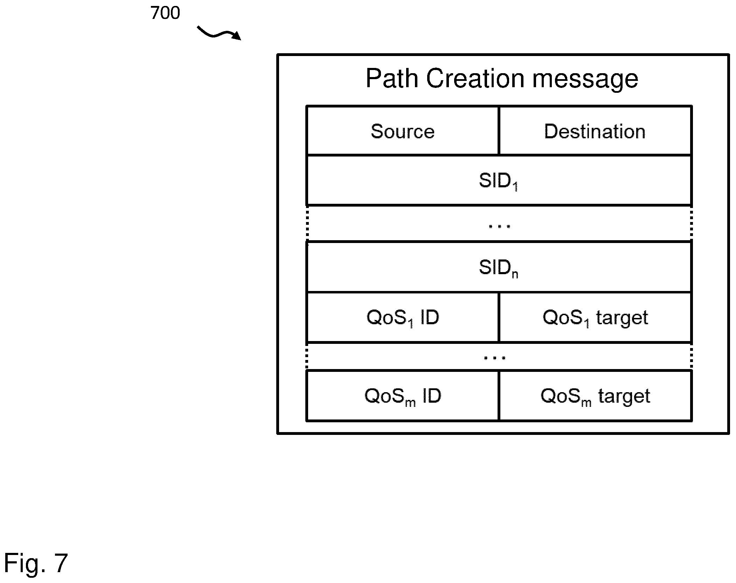

More specifically, the at least one performance measure, i.e. the at least one QoS metric (as defined, for instance, by a SLA) associated to a given network flow may be communicated to the intermediate nodes 110b-d along the communication path and to the destination node 110e by the source node 110a using a path creation message 700 (as will be described in more detail in the context of figure 7) including the performance measure requirements. In an embodiment, only a subset of the flows, i.e. communication paths within the communication network 100 may be monitored, in a form of differentiated high quality service. The intermediate nodes 110b-d along the communication path may continuously monitor the various performance measures, i.e. QoS metrics. In case of violation, the nodes may signal the degradation to the upstream nodes on the path by using the path degradation message 800, which may include information about whether and/or by which degree a performance measure, i.e. QoS metric has been violated. The intermediate network nodes 110b-d may either react to the reception of the path degradation message 800 by looking for an alternative path able to respect the end-to-end performance measure, i.e. QoS metric (as defined by the SLA) or they can relay the path degradation message 800 to upstream nodes to trigger a path reparation.

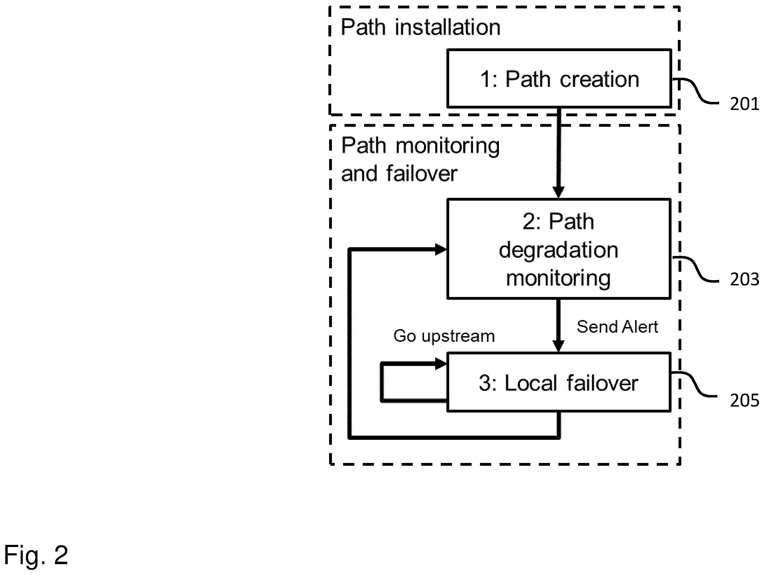

Figure 2 shows a schematic diagram illustrating processing stages implemented by the plurality of network nodes 110a-e, in particular the exemplary intermediate network node 110c already described above. In a first stage 201, a communication path is created for a given application with associated end-to-end performance measure, i.e. QoS metric requirements (as defined, for instance, by a SLA). In a second stage 203, after observing a degradation on the path, an intermediate node, such as the exemplary network node 110c, sends path degradation alerts to the other nodes along the communication path. In a third stage 205, the intermediate nodes may take the responsibility for tackling the path degradation.

For instance, in the path creation stage 201 the network node, i.e. source node 110a illustrated in figure 1 may want to set up a communication path for an application it supports to the network node, i.e. destination node 110e. By way of example, the source node 110a may not want the end-to-end delay to exceed a given value, say 6 ms, along the communication path. In this example, the delay is used as the principal performance measure as the QoS metric of the communication path. As will be appreciated, however, other performance measures may be used as a QoS metric as well, such as jitter, packet loss, bandwidth or combinations thereof.

For selecting the communication path during the path creation stage 201, the source node 110a may be assisted by a path determination entity or a similar service in charge of traffic engineering within the communication network 100. By way of example, the source node 110a may select the communication path A-B-C-D-E, which supports a minimum delay that equals 5 ms. This minimum delay is respecting the end-to-end QoS requirements. To formally create this communication path, in an embodiment, the source node 110a may send the path creation message 700 along the communication path A-B-C-D-E. In an embodiment, the path creation message 700 may be similar to the "Resv message" known from the Resource Reservation Protocol (RSVP), but with the difference that the path creation message 700 may include information about the end-to-end QoS requirements.

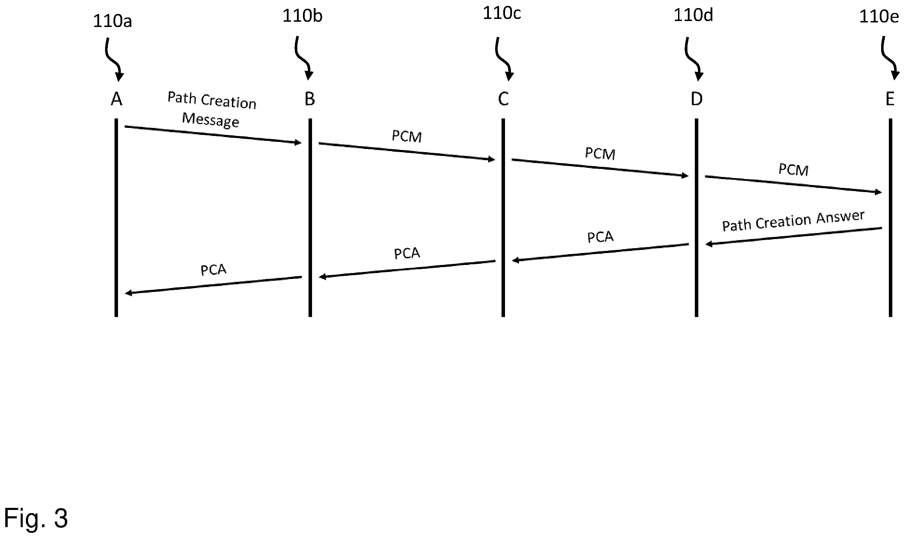

As illustrated in figure 3, the path creation message (PCM) 700 is sent along the communication path to the nodes 110b (B), 110c (C), 110d (D) and 110e (E). By receiving of the path creation message 700, those nodes 110b-e retrieve the information about the end-to-end QoS requirements for the network flow. In an embodiment, the network nodes 110b-d may store this QoS requirement (for instance, the network node 110c may store this information in a memory 115c) and activate the monitoring of the delay QoS metric for packets belonging to this network flow. Then, they relay the packet to the next node, until the destination node 110e is reached. If no intermediate node 110b-d nor the destination node 110e opposes this path creation due to an incapacity to cope with the end-to-end QoS requirements, a path creation answer (PCA) may be sent back to the source node 110a along the communication path to acknowledge the successful path creation.

After the path has been set up during the path creation stage 201, packets belonging to the network flow are relayed from the source node 110a to the destination node 110e following the path A-B-C-D-E. The delay, which is the exemplary QoS metric to monitor for this flow, is measured for the packets belonging to this flow._After some time, a path degradation is detected at the node 110d. At this stage, the node 110d may detect two types of path degradation events, namely a "QoS target miss" event or a "QoS target unreachable" event. A "QoS target miss" event means that the end-to-end QoS target, i.e. requirement has already been violated when the packet reaches the node 110d. For the example shown in figure 1, it can mean that the delay measured for the packet at the node 110d already exceeds 6 ms. A "QoS target unreachable" event means that the end-to-end QoS requirement has not been violated yet, but the QoS target cannot be met given the characteristics of the path towards the destination node 110e. In the example shown in figure 1, the minimum delay from the network node 110d to the destination node 110e is 2 ms, so that, if the delay measured at the network node 110d for a packet is already 5 ms, the resulting final delay at the destination node 110e cannot be below 6 ms.

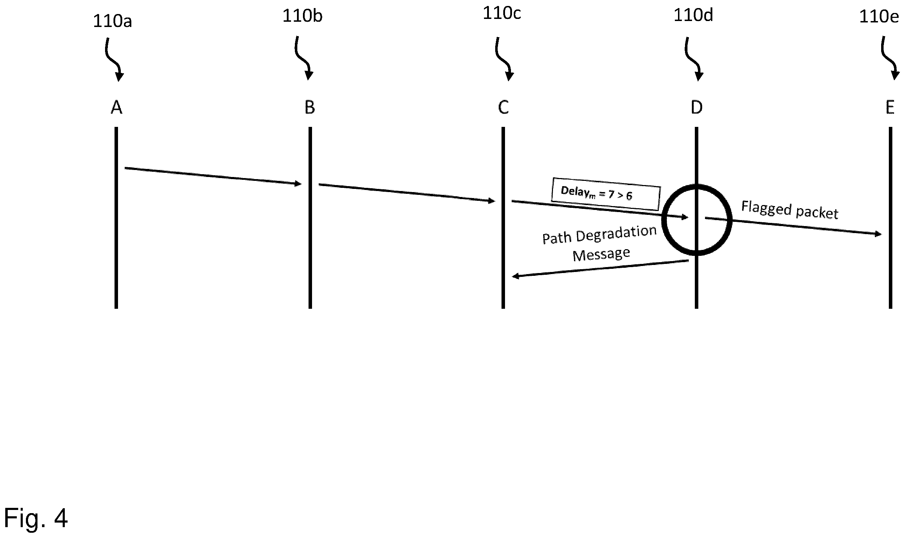

In both cases, the network node 110d may detect a path degradation and decides to alert the other nodes about this violation. In an embodiment, this action may comprise two operations (as illustrated in figure 4). As a first operation, the network node 110d may continue to relay the data packets belonging to the network flow to the destination node 110e. However, for informing the other downstream nodes that it has detected a QoS degradation, it may place a flag on the packets towards the destination node 110e. By doing this, the network node 110d informs the downstream nodes that it has already detected a QoS degradation. The purpose of this flag is to inhibit reactions to this degradation by other nodes that are located downstream. Indeed, an additional reaction by downstream nodes may result in a network instability. As a second operation, the network node 110d creates the path degradation message 800 and sends the message to upstream nodes, such as the node 110c, to warn the upstream nodes about the QoS degradation. This message 800 may include a quantification of the QoS degradation, e.g. the measured derivation from the expected QoS level. For instance, in the example shown in figure 1, the network node 110d may include the delay measured for the packet in the path degradation message 800, and compare it with the target it had. The path degradation message 800 is sent to the upstream nodes towards the source node 110a, in the reverse direction of the path taken by the packets belonging to the monitored network flow.

After a degradation has been detected during the path degradation monitoring stage 203 and the path degradation message 800 has been sent by a network node, such as the network node 110d or the network node 110c, to the upstream nodes along the communication path, those upstream nodes, such as the network node 110b or the network node 110c, receive this path degradation message 800 and process the same. When it receives the path degradation message 800, the respective network node, such as the network node 110b or the network node 110a, may determine whether it can repair the path itself by determining an alternative communication path to the destination node 110e or not. In the example shown in figure 1, the network node 110c may be configured to decide whether and how it should react to the path degradation message 800 received from the network node 110d. As a first reaction, the network node 110c may determine an alternative communication path to the destination node 110e as well as the characteristics of this alternative communication path. In the example shown in figure 1, the network node 110c may determine or know the communication path C-E, which is an alternative for path C-D-E. If an alternative communication path has been determined by the network node 110c, then other elements may be considered. For instance, in determining and selecting an alternative communication path the network node 110c may be configured to implement further mechanism for increasing the routing stability.

In an embodiment, the network node 110c may be allowed to repair the path according to a hysteresis factor based on a cooldown period. More specifically, if the network node 110c has already repaired the path, i.e. determined an alternative communication path for a given flow a short time ago (that is smaller than the rerouting cooldown period), then the network node 110c is barred from determining an alternative communication path for this flow for a period of time given by the hysteresis factor, e.g. until the re-routing cooldown period is over.

In a further embodiment, the network node 110c may be configured to determine whether the improvements that the rerouting (i.e. the alternative communication path) can make are sufficient to repair the path efficiently. As will be appreciated, the network node 110c should not select an alternative communication path, if the benefit induced by the rerouting is not sufficient to make this reparation last. To this end, a degradation factor $f_d$ for a given QoS metric may be introduced. This degradation factor may be computed based on the following equation:

$$f_d = QoS_{measured} / QoS_{IGP},$$

where $QoS_{measured}$ is the QoS measured up to the intermediate node 110c and $QoS_{IGP}$ is the QoS that should be obtained from the source 110a to the intermediate node 110c according to the data provided by the IGP (Interior Gateway protocol such as OSPF-TE) or the current routing protocol. To determine if the alternative path can efficiently repair the path with regard to the end-to-end QoS metric requirements, the network node 110c may be configured to multiply the IGP QoS metric over the path from the intermediate node 110c to the destination node 110e by the degradation factor $f_d$, and the result may be added to the QoS metric that has already been measured from the source 110a to the intermediate node 110c. If the result can still satisfy the end-to-end QoS metric requirement (as defined by the SLA), then the alternative path may be selected by the network node 110c.

In a further embodiment, the network node 110c may be configured to determine an alternative communication paths based on one or more of the following inputs: (i) the network node 110c may maintain a Traffic Engineering (TE) database that contains the link states $LS_m^e$ received from the OSPF-TE routing messages and the link metrics $m \in M$ on links $e \in E$ which are averaged values advertised by other nodes; (ii) the deviation ($LOSS_m$) from the SLA requirement for QoS constraints $m \in M$; and (iii) the destination node $D$ 110e. Using this information, the intermediate node 110c may determine whether it can find an alternative communication path satisfying the following equation:

$$\sum_{e \in P_{new}} LS_m^e \leq \sum_{e \in P_{old}} LS_m^e - LOSS_m \quad \forall m \in M$$

As already described above, a degradation factor may be applied to path candidates to make sure that the path reparation is sustainable and the load on the alternative path is evaluated to compute the rerouting probability.

If an alternative communication path can be selected by the network node 110c, the final decision to reroute the traffic along this alternative path may depend on a rerouting probability P. This rerouting probability is introduced to stabilize the routing performed within the communication network 100. It may influence the rerouting decision taken by the network node 110c and may depend on the load that is observed on the path on which the flow is supposed to be rerouted. If the load on the candidate alternative path is high, the rerouting probability is low, because then the self-load effect would affect the path more, and the rerouting is less likely to be done.

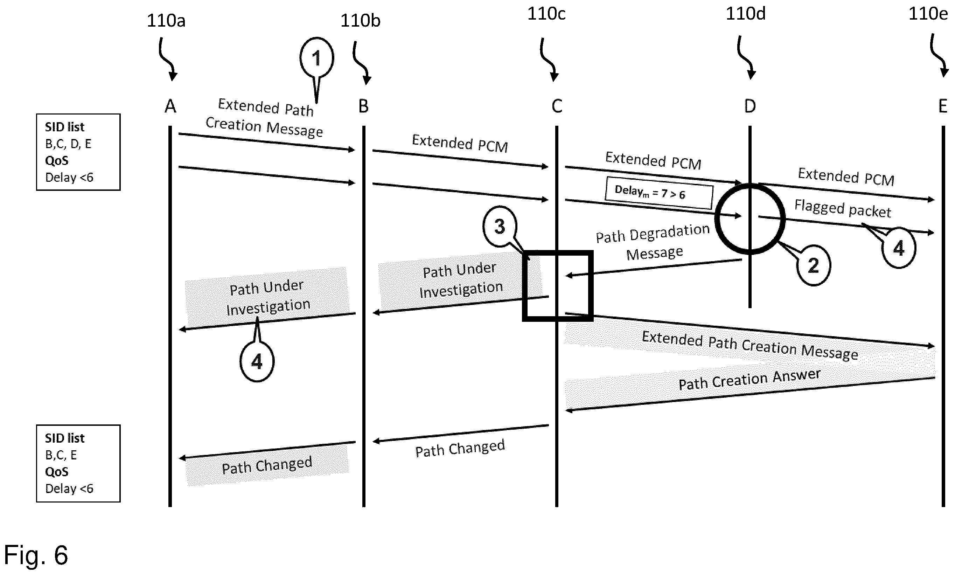

After this decision process, if a rerouting can be done, the rerouting network node 110c informs the upstream node 110b that it is attempting to locally repair the path by sending a path under investigation message to the upstream node, such as the upstream node 110d, along the path towards the destination node 110e, and flags the packet relayed along the degraded path to warn the downstream nodes (as illustrated in figure 6). According to embodiments disclosed herein, the intermediate nodes 110b-d can adopt either a passive or an active approach towards the reception of a path under investigation message. In an embodiment, the intermediate nodes 110b-d may either "silently" relay the path under investigation message to the further upstream nodes without any further actions triggered by the message. In an alternative embodiment, an intermediate node, such as the network node 110c, may be configured to actively look for an alternative communication path without triggering the rerouting to be able to react more quickly, if the path reparation initiated by the further downstream rerouting node fails. The source node 110a, in turn, should handle the path under investigation message in an active way.

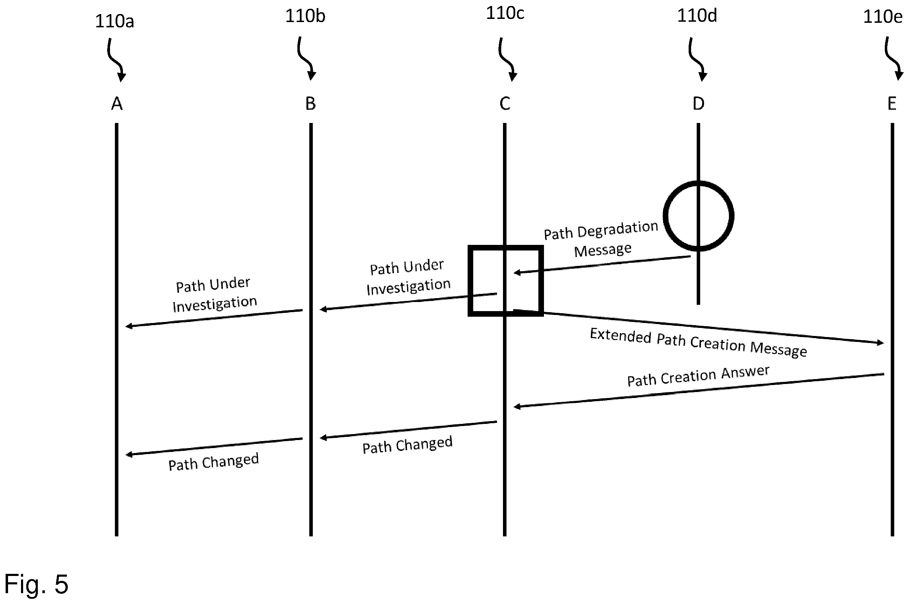

In the next phase, the rerouting node, i.e. the network node 110c, may initiate the rerouting by sending a path creation message 700 towards the destination node 110e using the alternative communication path. As already described above, this path creation message 700 allows intermediate nodes along the alternative communication path to learn about the QoS requirements for the flow and triggers the monitoring of associated QoS metrics. The alternative path creation may be acknowledged by a path creation answer sent by the destination node 110e to the rerouting node 110c along the alternative communication path (as illustrated in figures 5 and 6).

In response to the reception of the path creation answer message, the rerouting node 110c may send a path changed message along the path to the source node 110a so that the source node 110a as well as the intermediate nodes (such as the network node 111b) located upstream of the rerouting node 110c are informed that the reparation has been successful (as illustrated in figures 5 and 6). The source node 110a can then either change the list of nodes composing the path in subsequent packets belonging to the network flow, if a source-routing is used in the communication network 100 to steer the individual routing paths, or routing tables in the intermediate nodes 110b may be modified to reflect the change in the path to be used. After the rerouting node 110c has received the successful path creation answer and sent the path changed message along the path in the upstream direction, it can process the packets belonging to the network flow in accordance with the following two embodiments. In a first embodiment, the rerouting node 110c may relay those packets along the old path using the path description set by the source node 110a, flagging those packets to signal a QoS degradation to the downstream and waiting for the source node 110a to change the path according to the information sent in the path changed message. According to a second embodiment, the rerouting node 110c may actively rewrite the path description in the packets to start rerouting the packets along the new alternative path before the source node 110a modifies the path description (as illustrated in figure 5).

The mechanisms described above for the three stages 201, 203 and 205 may include timers to account for the absence of reaction from other nodes on the path. For instance, if the node that detects the QoS degradation (node 110d in the example of figure 1) cannot see a reaction from upstream nodes (either no flagged packets have been seen, or traffic is still flowing along the path without modification) for a given period of time, then the respective node may resend the path degradation message 800. If the rerouting node 110c does not get an answer to its path creation message 700 before a given period of time, then it may resend the path creation message 700. If the rerouting node 110c does not see that the source node 110a has modified the path description after it has sent the path changed message, it may resend the path changed message. The settings for those timers may take into account a balance between the reactivity of the system to a path degradation event and the control messaging overload.

According to the claimed invention, the path degradation message is resent to the upstream network node, in case the communication path remains unchanged for a time interval that is larger than a reaction time interval threshold.

As already mentioned above, embodiments disclosed herein may be based on or implement at least parts of the Resource Reservation Protocol (RSVP). This protocol defines some protocol messages that may be modified in the following way according to embodiments disclosed herein.

The path creation message (PCM) 700 already mentioned above and illustrated in more detail in figure 7 may be based on the Resv message of the RSVP. In the embodiment shown in figure 7 the PCM 700 contains information about the path to be taken between the source node 110a and the destination node 110e. The addresses of both the source node 110a and the destination node 110e may appear in the path creation message 700. The path to be taken between the source node 110a and the destination node 110e may be described, for instance, by using a Segment Identifier (SID) list. This list defines the nodes to be traversed by the packets belonging to the flow in order. In the packet payload, a set of <QoS ID; QoS target> tuples may be added that describe the end-to-end metrics that must be respected by packets belonging to the flow. As the end-to-end SLA can consider several metrics, each metric may be identified by an identifier, and then the target value for this metric is given. The payload format may be derived from the POLICY_DATA attribute used in RSVP, while the formatting of the SLA descriptors may be derived from the PCEP format used in PCReq messages.

The path degradation message (PDM) 800 already mentioned above and illustrated in more detail in figure 8 may contain information for describing the QoS degradation that has been observed by an intermediate node on the path. This message 800 may contain the source node 110a and the destination node 110e of the path, the Segment Identifier of the node that has observed the path degradation and then the various QoS metrics and a quantification of the deviation from the target QoS value that has been observed for those metrics. In an embodiment, this message may be based on the PathErr message in the RSVP. An ERROR_SPEC attribute may be used to carry the identity of the node that detected the path degradation. The measured deviation from the QoS target may be included in the path degradation message 800 using the same format as the format used in the path creation message 700 to convey the end-to-end SLA requirements.

The path under investigation (PUI) message already mentioned above may be sent to upstream nodes by a node that received a PDM 800 and is willing to react to it. The format of the PUI message may be similar to the PDM 800, but it does not contain information about the QoS deviation. Thus, this PUI message is lighter than a PDM 800.

The path changed (PC) message already mentioned above may be sent by the rerouting node 110c along the path towards the source node 110a to inform the source node 110a and intermediate upstream nodes, such as the node 110b, about the repaired path. This message borrows the same formatting as a Path message in RSVP with a RECORD_ROUTE object. It is used in RSVP to encode the routing path and share it with other nodes (the source node in general, when intermediate nodes change the routing path).

As already described above, a flag or other indicator may be used for signaling the detection of a path degradation to downstream nodes. This flag may take the form of an IP header option added by the node that detected the SLA degradation to packets belonging to the network flow.

Embodiments disclosed herein provide a system of network nodes 110a-e for a fast failover in case of path degradation so that the packets belonging to a given network flow meet SLA requirements associated with the needs of the distributed application they serve. According to embodiments disclosed herein, a local reparation of the path is performed by intermediate nodes located on the packets' path in order to speed up the QoS failover and to maximize stability. In an embodiment, the SLA associated with a given network flow may be communicated to the intermediate nodes 110b-d on the path and to the destination node 110e by the source node 110a using the path creation message 700 including the SLA requirements. In an embodiment, the intermediate nodes 110b-d on the path may continuously monitor the various SLA metrics. In case of violation, the intermediate nodes 110b-d may signal the degradation to the upstream nodes on the path by using the path degradation message 800 which may include quantifications of the SLA violations. In an embodiment, the intermediate nodes 110b-d can either react to the reception of the path degradation message 800 by looking for an alternative path able to respect the end-to-end SLA or they can relay the message 800 to upstream nodes to trigger a path reparation. As already described above, the rerouting decision may be influenced by a set of mechanisms to enforce stability and avoid routing oscillations.

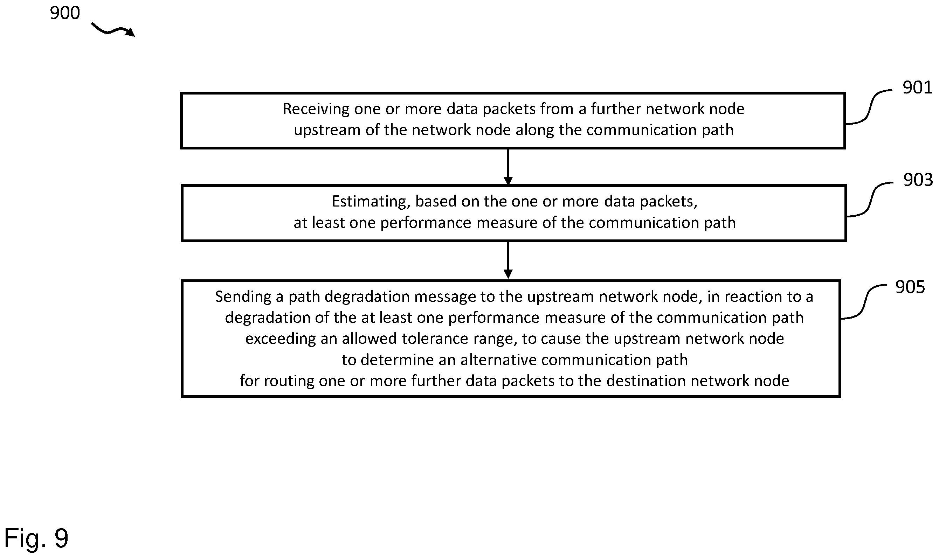

Figure 9 shows a flow diagram illustrating a method 900 of operating the network node 110c according to an embodiment for routing data packets in the communication network 100 along a communication path from the source network node 110a to the destination network node 110e.

The method 900 comprises a first step 901 of receiving one or more data packets from the further network node 101b upstream of the network node 101c along the communication path.

Moreover, the method 900 comprises a step 903 of estimating, based on the one or more data packets, at least one performance measure, i.e. at least one QoS metric of the communication path from the source network node 101a to the network node 101c.

The method 900 comprises the further step 905 of sending a path degradation message 800 to the upstream network node 101b and possibly further upstream network nodes, including the source network node 101a, in case a degradation of the at least one performance measure of the communication path exceeds an allowed tolerance range, for triggering the upstream network node 101b or possibly further upstream network nodes 101a to determine an alternative communication path for routing one or more further data packets to the destination network node 101e.

Further features of the method 900 result directly from the structure and/or functionality of the network nodes 110a-e as well as their different embodiments described above.

The person skilled in the art will understand that the "blocks" ("units") of the various figures (method and apparatus) represent or describe functionalities of embodiments of the present disclosure (rather than necessarily individual "units" in hardware or software) and thus describe equally functions or features of apparatus embodiments as well as method embodiments (unit = step).

In the several embodiments provided in the present application, it should be understood that the disclosed system, apparatus, and method may be implemented in other manners. For example, the described embodiment of an apparatus is merely exemplary. For example, the unit division is merely logical function division and may be another division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the invention may be integrated into one processing unit, or each of the units may exist alone physically, or two or more units are integrated into one unit. in the path to be used. After the rerouting node 110c has received the successful path creation answer and sent the path changed message along the path in the upstream direction, it can process the packets belonging to the network flow in accordance with the following two embodiments. In a first embodiment, the rerouting node 110c may relay those packets along the old path using the path description set by the source node 110a, flagging those packets to signal a QoS degradation to the downstream and waiting for the source node 110a to change the path according to the information sent in the path changed message. According to a second embodiment, the rerouting node 110c may actively rewrite the path description in the packets to start rerouting the packets along the new alternative path before the source node 110a modifies the path description (as illustrated in figure 5).

The mechanisms described above for the three stages 201, 203 and 205 may include timers to account for the absence of reaction from other nodes on the path. For instance, if the node that detects the QoS degradation (node 110d in the example of figure 1) cannot see a reaction from upstream nodes (either no flagged packets have been seen, or traffic is still flowing along the path without modification) for a given period of time, then the respective node may resend the path degradation message 800. If the rerouting node 110c does not get an answer to its path creation message 700 before a given period of time, then it may resend the path creation message 700. If the rerouting node 110c does not see that the source node 110a has modified the path description after it has sent the path changed message, it may resend the path changed message. The settings for those timers may take into account a balance between the reactivity of the system to a path degradation event and the control messaging overload.

As already mentioned above, embodiments disclosed herein may be based on or implement at least parts of the Resource Reservation Protocol (RSVP). This protocol defines some protocol messages that may be modified in the following way according to embodiments disclosed herein.

The path creation message (PCM) 700 already mentioned above and illustrated in more detail in figure 7 may be based on the Resv message of the RSVP. In the embodiment shown in figure 7 the PCM 700 contains information about the path to be taken between the source node 110a and the destination node 110e. The addresses of both the source node 110a and the destination node 110e may appear in the path creation message 700. The path to be taken between the source node 110a and the destination node 110e may be described, for instance, by using a Segment Identifier (SID) list. This list defines the nodes to be traversed by the packets belonging to the flow in order. In the packet payload, a set of <QoS ID; QoS target> tuples may be added that describe the end-to-end metrics that must be respected by packets belonging to the flow. As the end-to-end SLA can consider several metrics, each metric may be identified by an identifier, and then the target value for this metric is given. The payload format may be derived from the POLICY_DATA attribute used in RSVP, while the formatting of the SLA descriptors may be derived from the PCEP format used in PCReq messages.

The path degradation message (PDM) 800 already mentioned above and illustrated in more detail in figure 8 may contain information for describing the QoS degradation that has been observed by an intermediate node on the path. This message 800 may contain the source node 110a and the destination node 110e of the path, the Segment Identifier of the node that has observed the path degradation and then the various QoS metrics and a quantification of the deviation from the target QoS value that has been observed for those metrics. In an embodiment, this message may be based on the PathErr message in the RSVP. An ERROR_SPEC attribute may be used to carry the identity of the node that detected the path degradation. The measured deviation from the QoS target may be included in the path degradation message 800 using the same format as the format used in the path creation message 700 to convey the end-to-end SLA requirements.

The path under investigation (PUI) message already mentioned above may be sent to upstream nodes by a node that received a PDM 800 and is willing to react to it. The format of the PUI message may be similar to the PDM 800, but it does not contain information about the QoS deviation. Thus, this PUI message is lighter than a PDM 800.

The path changed (PC) message already mentioned above may be sent by the rerouting node 110c along the path towards the source node 110a to inform the source node 110a and intermediate upstream nodes, such as the node 110b, about the repaired path. This message borrows the same formatting as a Path message in RSVP with a RECORD_ROUTE object. It is used in RSVP to encode the routing path and share it with other nodes (the source node in general, when intermediate nodes change the routing path).

As already described above, a flag or other indicator may be used for signaling the detection of a path degradation to downstream nodes. This flag may take the form of an IP header option added by the node that detected the SLA degradation to packets belonging to the network flow.

Embodiments disclosed herein provide a system of network nodes 110a-e for a fast failover in case of path degradation so that the packets belonging to a given network flow meet SLA requirements associated with the needs of the distributed application they serve. According to embodiments disclosed herein, a local reparation of the path is performed by intermediate nodes located on the packets' path in order to speed up the QoS failover and to maximize stability. In an embodiment, the SLA associated with a given network flow may be communicated to the intermediate nodes 110b-d on the path and to the destination node 110e by the source node 110a using the path creation message 700 including the SLA requirements. In an embodiment, the intermediate nodes 110b-d on the path may continuously monitor the various SLA metrics. In case of violation, the intermediate nodes 110b-d may signal the degradation to the upstream nodes on the path by using the path degradation message 800 which may include quantifications of the SLA violations. In an embodiment, the intermediate nodes 110b-d can either react to the reception of the path degradation message 800 by looking for an alternative path able to respect the end-to-end SLA or they can relay the message 800 to upstream nodes to trigger a path reparation. As already described above, the rerouting decision may be influenced by a set of mechanisms to enforce stability and avoid routing oscillations.

Figure 9 shows a flow diagram illustrating a method 900 of operating the network node 110c according to an embodiment for routing data packets in the communication network 100 along a communication path from the source network node 110a to the destination network node 110e.

The method 900 comprises a first step 901 of receiving one or more data packets from the further network node 101b upstream of the network node 101c along the communication path.

Moreover, the method 900 comprises a step 903 of estimating, based on the one or more data packets, at least one performance measure, i.e. at least one QoS metric of the communication path from the source network node 101a to the network node 101c.

The method 900 comprises the further step 905 of sending a path degradation message 800 to the upstream network node 101b and possibly further upstream network nodes, including the source network node 101a, in case a degradation of the at least one performance measure of the communication path exceeds an allowed tolerance range, for triggering the upstream network node 101b or possibly further upstream network nodes 101a to determine an alternative communication path for routing one or more further data packets to the destination network node 101e.

According to the claimed invention, the method further comprises the step of resending the path degradation message to the upstream network node, in case the communication path remains unchanged for a time interval that is larger than a reaction time interval threshold.

Further features of the method 900 result directly from the structure and/or functionality of the network nodes 110a-e as well as their different embodiments described above.

The person skilled in the art will understand that the "blocks" ("units") of the various figures (method and apparatus) represent or describe functionalities of embodiments of the present disclosure (rather than necessarily individual "units" in hardware or software) and thus describe equally functions or features of apparatus embodiments as well as method embodiments (unit = step).

In the several embodiments provided in the present application, it should be understood that the disclosed system, apparatus, and method may be implemented in other manners. For example, the described embodiment of an apparatus is merely exemplary. For example, the unit division is merely logical function division and may be another division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the invention may be integrated into one processing unit, or each of the units may exist alone physically, or two or more units are integrated into one unit.

## Claims

1. A network node (110c) for routing data packets in a communication network (100), the communication network (100) comprising a plurality of network nodes (110a-e) along a communication path from a source network node (110a) to a destination network node (110e), wherein the network node (110c) comprises:

   a communication interface (113c) configured to receive one or more data packets from a further network node (110b) upstream of the network node (110c) along the communication path; and
   a processing circuitry (111c) configured to estimate, based on the one or more data packets, at least one performance measure of the communication path,
   wherein the communication interface (113c) is further configured, in reaction to a degradation of the at least one performance measure of the communication path exceeding an allowed tolerance range, to send a path degradation message (800) to the upstream network node (110b) to cause the upstream network node (110b) to determine an alternative communication path for routing one or more further data packets to the destination network node (110e);
   wherein the communication interface (113c) is further configured to resend the path degradation message (800) to the upstream network node (110b), in case the communication path remains unchanged for a time interval that is larger than a reaction time interval threshold.

2. The network node (110c) of claim 1, wherein the path degradation message (800) comprises an estimate of the degradation of the at least one performance measure of the communication path.

3. The network node (110c) of claim 1 or 2, wherein the network node (110c) is an intermediate network node (110c) along the communication path between the source network node (110a) and the destination network node (110e) or the destination network node (110e).

4. The network node (110c) of any one of the preceding claims, wherein the processing circuitry (111c) is further configured, in reaction to the degradation of the at least one performance measure of the communication path exceeding the allowed tolerance range, to determine an alternative communication path for routing the one or more data packets to the destination network node (110e).

5. The network node (110c) of claim 4, wherein the communication interface (113c) is further configured, in reaction to the degradation of the performance measure of the communication path exceeding the allowed tolerance range, to forward the one or more data packets to a further network node (110d) downstream of the network node (110c) along the communication path with an indication that the degradation of the at least one performance measure of the communication path exceeds the allowed tolerance range and/or an indication that the network node (110c) is determining an alternative communication path for routing the one or more data packets to the destination network node (110e).

6. The network node (110c) of claim 4 or 5, wherein the communication interface (113c) is further configured, in reaction to the degradation of the at least one performance measure of the communication path exceeding the allowed tolerance range, to send a message to one or more further upstream network nodes (110b) to inform the one or more further upstream network nodes (110b) that the network node (110c) is determining an alternative communication path for routing the one or more data packets to the destination network node (110e).

7. The network node (110c) of any one of the preceding claims, wherein the communication interface (113c) is further configured to receive a further path degradation message (800) from a further network node downstream (110d) of the network node (110c) along the communication path, and wherein the processing circuitry (111c) is further configured to determine, in response to the further path degradation message (800), an alternative communication path for routing one or more further data packets to the destination network node (110e) or a further destination network node.

8. The network node (110c) of claim 7, wherein the communication interface (113c) is further configured to forward, in response to the further path degradation message (800), the further path degradation message (800) to one or more further upstream network nodes (110b), in case no alternative communication path for routing the one or more further data packets to the destination network node (110e) or the further destination network node via the network node (110c) is available.

9. The network node (110c) of claim 7 or 8, wherein the processing circuitry (111c) is configured to determine the alternative communication path by:

determining a further performance measure for each of a plurality of potential alternative communication paths for routing the one or more further data packets to the destination network node (110e) or the further destination network node, and
selecting the alternative communication path from the plurality of potential alternative communication paths based on the further performance measures.

10. The network node (110c) of any one of the preceding claims, wherein the communication interface (113c) is further configured to receive a path creation message (700) from the source network node (110a), wherein the path creation message (700) comprises information identifying a subset of the plurality of network nodes (110a-e) defining the communication path.

11. The network node (110c) of claim 10, wherein the path creation message (700) further comprises information about the allowed tolerance range of the degradation of the at least one performance measure of the communication path.

12. The network node (110c) of any one of the preceding claims, wherein the at least one performance measure of the communication path comprises at least one of a delay, a jitter, a packet loss, and a bandwidth of the one or more data packets received from the upstream network node.

13. A method (900) of operating a network node (110c) for routing data packets in a communication network (100), the communication network (100) comprising a plurality of network nodes (110a-e) along a communication path from a source network node (110a) to a destination network node (110e), wherein the method (900) comprises the steps of:

receiving (901) one or more data packets from a further network node (110b) upstream of the network node (110c) along the communication path;
estimating (903), based on the one or more data packets, at least one performance measure of the communication path; and
sending (905) a path degradation message to the upstream network node (110b), in reaction to a degradation of the at least one performance measure of the communication path exceeding an allowed tolerance range, to cause the upstream network node (110b) to determine an alternative communication path for routing one or more further data packets to the destination network node (110e); and
resending the path degradation message (800) to the upstream network node (110b), in case the communication path remains unchanged for a time interval that is larger than a reaction time interval threshold.

14. A computer program product comprising a computer-readable storage medium for storing program code which causes a computer or a processor to perform the method (900) of claim 13 when the program code is executed by the computer or the processor.

**Patentansprüche**

1. Netzwerkknoten (110c) zum Leitweglenken von Datenpaketen in einem Kommunikationsnetzwerk (100), wobei das Kommunikationsnetzwerk (100) eine Vielzahl von Netzwerkknoten (110a-e) entlang eines Kommunikationspfads von einem Quellnetzwerkknoten (110a) zu einem Zielnetzwerkknoten (110e) umfasst, wobei der Netzwerkknoten (110c) Folgendes umfasst:

eine Kommunikationsschnittstelle (113c), die konfiguriert ist, um ein oder mehrere Datenpakete von einem weiteren Netzwerkknoten (110b), der stromaufwärts des Netzwerkknotens (110c) entlang des Kommunikationspfads gelegen ist, zu empfangen; und
eine Verarbeitungsschaltung (111c), die konfiguriert ist, um basierend auf dem einen oder den mehreren Datenpaketen mindestens ein Leistungsmaß des Kommunikationspfads zu schätzen, wobei die Kommunikationsschnittstelle (113c) ferner konfiguriert ist, um als Reaktion auf eine Verschlechterung des mindestens einen Leistungsmaßes des Kommunikationspfads, die einen zulässigen Toleranzbereich überschreitet, eine Pfadverschlechterungsnachricht (800) an den stromaufwärts gelegenen Netzwerkknoten (110b) zu senden, um den stromaufwärts gelegenen Netzwerkknoten (110b) dazu zu veranlassen, einen alternativen Kommunikationspfad für ein Leitweglenken eines oder mehrerer weiterer Datenpakete zu dem Zielnetzwerkknoten (110e) zu bestimmen; wobei die Kommunikationsschnittstelle (113c) ferner konfiguriert ist, um die Pfadverschlechterungsnachricht (800) erneut an den stromaufwärts gelegenen Netzwerkknoten (110b) zu senden, falls der Kommunikationspfad über einen Zeitintervall unverändert bleibt, der größer als ein Reaktionszeitintervallschwellenwert ist.

**2.** Netzwerkknoten (110c) nach Anspruch 1, wobei die Pfadverschlechterungsnachricht (800) eine Schätzung der Verschlechterung des mindestens einen Leistungsmaßes des Kommunikationspfads umfasst.

**3.** Netzwerkknoten (110c) nach Anspruch 1 oder 2, wobei der Netzwerkknoten (110c) ein Zwischennetzwerkknoten (110c) entlang des Kommunikationspfads zwischen dem Quellnetzwerkknoten (110a) und dem Zielnetzwerkknoten (110e) oder der Zielnetzwerkknoten (110e) ist.

**4.** Netzwerkknoten (110c) nach einem der vorhergehenden Ansprüche, wobei die Verarbeitungsschaltung (111c) ferner konfiguriert ist, um als Reaktion auf die Verschlechterung des mindestens einen Leistungsmaßes des Kommunikationspfads, die den zulässigen Toleranzbereich überschreitet, einen alternativen Kommunikationspfad für ein Leitweglenken des einen oder der mehreren Datenpakete an den Zielnetzwerkknoten (110e) zu bestimmen.

**5.** Netzwerkknoten (110c) nach Anspruch 4, wobei die Kommunikationsschnittstelle (113c) ferner konfiguriert ist, um als Reaktion auf die Verschlechterung des Leistungsmaßes des Kommunikationspfads, die den zulässigen Toleranzbereich überschreitet, das eine oder die mehreren Datenpakete an einen weiteren Netzwerkknoten (110d), der stromabwärts des Netzwerkknotens (110c) entlang des Kommunikationspfads gelegen ist, mit einem Hinweis, dass die Verschlechterung des mindestens einen Leistungsmaßes des Kommunikationspfads den zulässigen Toleranzbereich überschreitet und/oder einem Hinweis weiterzuleiten, dass der Netzwerkknoten (110c) einen alternativen Kommunikationspfad für ein Leitweglenken des einen oder der mehreren Datenpakete zu dem Zielnetzwerkknoten (110e) bestimmt.

**6.** Netzwerkknoten (110c) nach Anspruch 4 oder 5, wobei die Kommunikationsschnittstelle (113c) ferner konfiguriert ist, um als Reaktion auf die Verschlechterung des mindestens einen Leistungsmaßes des Kommunikationspfads, die den zulässigen Toleranzbereich überschreitet, eine Nachricht an einen oder mehrere weitere stromaufwärts gelegene Netzwerkknoten (110b) zu senden, um den einen oder die mehreren weiteren stromaufwärts gelegenen Netzwerkknoten (110b) darüber zu informieren, dass der Netzwerkknoten (110c) einen alternativen Kommunikationspfad für ein Leitweglenken des einen oder der mehreren Datenpakete zu dem Zielnetzwerkknoten (110e) bestimmt.

**7.** Netzwerkknoten (110c) nach einem der vorhergehenden Ansprüche, wobei die Kommunikationsschnittstelle (113c) ferner konfiguriert ist, um eine weitere Pfadverschlechterungsnachricht (800) von einem weiteren Netzwerkknoten (110d) zu empfangen, der stromabwärts des Netzwerkknotens (110c) entlang des Kommunikationspfads gelegen ist, und wobei die Verarbeitungsschaltung (111c) ferner konfiguriert ist, um als Reaktion auf die weitere Pfadverschlechterungsnachricht (800) einen alternativen Kommunikationspfad für ein Leitweglenken eines oder mehrerer weiterer Datenpakete zu dem Zielnetzwerkknoten (110e) oder einem weiteren Zielnetzwerkknoten zu bestimmen.

**8.** Netzwerkknoten (110c) nach Anspruch 7, wobei die Kommunikationsschnittstelle (113c) ferner konfiguriert ist, um, als Reaktion auf die weitere Pfadverschlechterungsnachricht (800), die weitere Pfadverschlechterungsnachricht (800) an einen oder mehrere weitere stromaufwärts gelegene Netzwerkknoten (110b) weiterzuleiten, falls kein alternativer Kommunikationspfad für ein Leitweglenken des einen oder der mehreren weiteren Datenpakete zu dem Zielnetzwerkknoten (110e) oder dem weiteren Zielnetzwerkknoten über den Netzwerkknoten (110c) verfügbar ist.

**9.** Netzwerkknoten (110c) nach Anspruch 7 oder 8, wobei die Verarbeitungsschaltung (111c) konfiguriert ist, um den alternativen Kommunikationspfad durch Folgendes zu bestimmen:

Bestimmen eines weiteren Leistungsmaßes für jeden einer Vielzahl von potenziellen alternativen Kommunikationspfaden für ein Leitweglenken des einen oder der mehreren weiteren Datenpakete an den Zielnetzwerkknoten (110e) oder den weiteren Zielnetzwerkknoten und Auswählen des alternativen Kommunikationspfads aus der Vielzahl von potenziellen alternativen Kommunikationspfaden basierend auf den weiteren Leistungsmaßen.

**10.** Netzwerkknoten (110c) nach einem der vorhergehenden Ansprüche, wobei die Kommunikationsschnittstelle (113c) ferner konfiguriert ist, um eine Pfaderstellungsnachricht (700) von dem Quellnetzwerkknoten (110a) zu empfangen, wobei die Pfaderstellungsnachricht (700) Informationen umfasst, die eine Teilmenge der Vielzahl von Netzwerkknoten (110a-e) identifizieren, die den Kommunikationspfad definieren.

**11.** Netzwerkknoten (110c) nach Anspruch 10, wobei die Pfaderstellungsnachricht (700) ferner Informationen über den zulässigen Toleranzbereich der Verschlechterung des mindestens einen Leistungsmaßes des Kommunikationspfads umfasst.

**12.** Netzwerkknoten (110c) nach einem der vorhergehenden Ansprüche, wobei das mindestens eine Leistungsmaß des Kommunikationspfads mindestens eines von einer Verzögerung, einem Jitter, einem Paketverlust und einer Bandbreite des einen oder der mehreren Datenpakete umfasst, die von dem stromaufwärts gelegenen Netzwerkknoten empfangen werden.

**13.** Verfahren (900) zum Betreiben eines Netzwerkknotens (110c) zum Leitweglenken von Datenpaketen in einem Kommunikationsnetzwerk (100), wobei das Kommunikationsnetzwerk (100) eine Vielzahl von Netzwerkknoten (110a-e) entlang eines Kommunikationspfads von einem Quellnetzwerkknoten (110a) zu einem Zielnetzwerkknoten (110e) umfasst, wobei das Verfahren (900) die folgenden Schritte umfasst:

Empfangen (901) eines oder mehrerer Datenpakete von einem weiteren Netzwerkknoten (110b), der stromaufwärts des Netzwerkknotens (110c) entlang des Kommunikationspfads gelegen ist;

Schätzen (903) mindestens eines Leistungsmaßes des Kommunikationspfads basierend auf dem einem oder den mehreren Datenpaketen; und

Senden (905) einer Pfadverschlechterungsnachricht an den stromaufwärts gelegenen Netzwerkknoten (110b) als Reaktion auf eine Verschlechterung des mindestens einen Leistungsmaßes des Kommunikationspfads, die einen zulässigen Toleranzbereich überschreitet, um den stromaufwärts gelegenen Netzwerkknoten (110b) dazu zu veranlassen, einen alternativen Kommunikationspfad für ein Leitweglenken eines oder mehrerer weiterer Datenpakete zu dem Zielnetzwerkknoten (110e) zu bestimmen; und

erneutes Senden der Pfadverschlechterungsnachricht (800) an den stromaufwärts gelegenen Netzwerkknoten (110b), falls der Kommunikationspfad über einen Zeitintervall unverändert bleibt, der größer als ein Reaktionszeitintervallschwellenwert ist.

**14.** Computerprogrammprodukt, umfassend ein computerlesbares Speichermedium zum Speichern von Programmcode, der einen Computer oder einen Prozessor dazu veranlasst, das Verfahren (900) nach Anspruch 13 durchzuführen, wenn der Programmcode durch den Computer oder den Prozessor ausgeführt wird.

## Revendications

**1.** Nœud de réseau (110c) pour acheminer des paquets de données dans un réseau de communication (100), le réseau de communication (100) comprenant une pluralité de nœuds de réseau (110a-e) le long d'un chemin de communication allant d'un nœud de réseau source (110a) à un nœud de réseau de destination (110e), dans lequel le nœud de réseau (110c) comprend :

une interface de communication (113c) configurée pour recevoir un ou plusieurs paquets de données provenant d'un nœud de réseau supplémentaire (110b) en amont du nœud de réseau (110c) le long du chemin de communication ; et

un circuit de traitement (111c) configuré pour estimer, sur la base des un ou plusieurs paquets de données, au moins une mesure de performance du chemin de communication,

dans lequel l'interface de communication (113c) est également configurée, en réaction à une dégradation de l'au moins une mesure de performance du chemin de communication dépassant une plage de tolérance autorisée, pour envoyer un message de dégradation de chemin (800) au nœud de réseau en amont (110b) afin d'amener le nœud de réseau en amont (110b) à déterminer un chemin de communication alternatif pour acheminer un ou plusieurs paquets de données supplémentaires vers le nœud de réseau de destination (110e) ;

dans lequel l'interface de communication (113c) est également configurée pour renvoyer le message de dégradation de chemin (800) au nœud de réseau en amont (110b), au cas où le chemin de communication resterait inchangé pendant un intervalle de temps supérieur à un seuil d'intervalle de temps de réaction.

2. Nœud de réseau (110c) selon la revendication 1, dans lequel le message de dégradation de chemin (800) comprend une estimation de la dégradation de l'au moins une mesure de performance du chemin de communication.

3. Nœud de réseau (110c) selon la revendication 1 ou 2, dans lequel le nœud de réseau (110c) est un nœud de réseau intermédiaire (110c) le long du chemin de communication entre le nœud de réseau source (110a) et le nœud de réseau de destination (110e) ou le nœud de réseau de destination (110e).

4. Nœud de réseau (110c) selon l'une quelconque des revendications précédentes, dans lequel le circuit de traitement (111c) est également configuré, en réaction à la dégradation de l'au moins une mesure de performance du chemin de communication dépassant la plage de tolérance autorisée, pour déterminer un chemin de communication alternatif pour acheminer les un ou plusieurs paquets de données vers le nœud de réseau de destination (110e).

5. Nœud de réseau (110c) selon la revendication 4, dans lequel l'interface de communication (113c) est également configurée, en réaction à la dégradation de la mesure de performance du chemin de communication dépassant la plage de tolérance autorisée, pour transmettre les un ou plusieurs paquets de données à un nœud de réseau supplémentaire (110d) en aval du nœud de réseau (110c) le long du chemin de communication avec une indication selon laquelle la dégradation de l'au moins une mesure de performance du chemin de communication dépasse la plage de tolérance autorisée et/ou une indication selon laquelle le nœud de réseau (110c) détermine un chemin de communication alternatif pour acheminer les un ou plusieurs paquets de données vers le nœud de réseau de destination (110e).

6. Nœud de réseau (110c) selon la revendication 4 ou 5, dans lequel l'interface de communication (113c) est également configurée, en réaction à la dégradation de l'au moins une mesure de performance du chemin de communication dépassant la plage de tolérance autorisée, pour envoyer un message à un ou plusieurs nœuds de réseau supplémentaires en amont (110b) afin d'informer les un ou plusieurs nœuds de réseau supplémentaires en amont (110b) que le nœud de réseau (110c) détermine un chemin de communication alternatif pour acheminer les un ou plusieurs paquets de données vers le nœud de réseau de destination (110e).

7. Nœud de réseau (110c) selon l'une quelconque des revendications précédentes, dans lequel l'interface de communication (113c) est également configurée pour recevoir un message de dégradation de chemin supplémentaire (800) d'un nœud de réseau supplémentaire en aval (110d) du nœud de réseau (110c) le long du chemin de communication, et dans lequel le circuit de traitement (111c) est également configuré pour déterminer, en réponse au message de dégradation de chemin supplémentaire (800), un chemin de communication alternatif pour acheminer un ou plusieurs paquets de données supplémentaires vers le nœud de réseau de destination (110e) ou un nœud de réseau de destination supplémentaire.

8. Nœud de réseau (110c) selon la revendication 7, dans lequel l'interface de communication (113c) est également configurée pour transmettre, en réponse au message de dégradation de chemin supplémentaire (800), le message de dégradation de chemin supplémentaire (800) à un ou plusieurs nœuds de réseau supplémentaires en amont (110b), au cas où aucun chemin de communication alternatif pour acheminer les un ou plusieurs paquets de données supplémentaires vers le nœud de réseau de destination (110e) ou le nœud de réseau de destination supplémentaire via le nœud de réseau (110c) n'est disponible.

9. Nœud de réseau (110c) selon la revendication 7 ou 8, dans lequel le circuit de traitement (111c) est configuré pour déterminer le chemin de communication alternatif par :

    la détermination d'une mesure de performance supplémentaire pour chacun d'une pluralité de chemins de communication alternatifs potentiels permettant d'acheminer les un ou plusieurs paquets de données supplémentaires vers le nœud de réseau de destination (110e) ou le nœud de réseau de destination supplémentaire, et
    la sélection du chemin de communication alternatif parmi la pluralité de chemins de communication alternatifs potentiels sur la base des mesures de performance supplémentaires.

10. Nœud de réseau (110c) selon l'une quelconque des revendications précédentes, dans lequel l'interface de communication (113c) est également configurée pour recevoir un message de création de chemin (700) du nœud de réseau source (110a), dans lequel le message de création de chemin (700) comprend des informations identifiant un sous-ensemble de la pluralité de nœuds de réseau (110a-e) définissant le chemin de communication.

11. Nœud de réseau (110c) selon la revendication 10, dans lequel le message de création de chemin (700) comprend également des informations sur la plage de tolérance autorisée de la dégradation de l'au moins une mesure de performance du chemin de communication.

**12.** Nœud de réseau (110c) selon l'une quelconque des revendications précédentes, dans lequel l'au moins une mesure de performance du chemin de communication comprend au moins l'un d'un délai, d'une gigue, d'une perte de paquets et d'une bande passante des un ou plusieurs paquets de données reçus du nœud de réseau en amont.

**13.** Procédé (900) de fonctionnement d'un nœud de réseau (110c) pour acheminer des paquets de données dans un réseau de communication (100), le réseau de communication (100) comprenant une pluralité de nœuds de réseau (110a-e) le long d'un chemin de communication allant d'un nœud de réseau source (110a) à un nœud de réseau de destination (110e), dans lequel le procédé (900) comprend les étapes suivantes :

la réception (901) d'un ou plusieurs paquets de données provenant d'un nœud de réseau supplémentaire (110b) en amont du nœud de réseau (110c) le long du chemin de communication ;
l'estimation (903), sur la base des un ou plusieurs paquets de données, d'au moins une mesure de performance du chemin de communication ; et
l'envoi (905) d'un message de dégradation de chemin au nœud de réseau en amont (110b), en réaction à une dégradation de l'au moins une mesure de performance du chemin de communication dépassant une plage de tolérance autorisée, afin d'amener le nœud de réseau en amont (110b) à déterminer un chemin de communication alternatif pour acheminer un ou plusieurs paquets de données supplémentaires vers le nœud de réseau de destination (110e) ; et
le renvoi du message de dégradation du chemin (800) au nœud de réseau en amont (110b), au cas où le chemin de communication resterait inchangé pendant un intervalle de temps supérieur à un seuil d'intervalle de temps de réaction.

**14.** Produit de programme informatique comprenant un support de stockage lisible par ordinateur pour stocker un code de programme qui amène un ordinateur ou un processeur à réaliser le procédé (900) selon la revendication 13 lorsque le code de programme est exécuté par l'ordinateur ou le processeur.

100
A
B
C
D
E
110a
110b
110c
110d
110e
Delay min: 1ms
Delay min: 1ms
Delay min: 1ms
Delay min: 2ms
Delay min: 1ms
Delay min: 1ms
Processor
Communication interface
Memory
111c
113c
115c
110c

Fig. 1

Path installation
1: Path creation
201
Path monitoring and failover
2: Path degradation monitoring
203
Send Alert
3: Local failover
205
Go upstream

Fig. 2

110a
110b
110c
110d
110e
A
B
C
D
E
Path Creation Message
PCM
PCM
PCM
Path Creation Answer
PCA
PCA
PCA

Fig. 3

110a
110b
110c
110d
110e
A
B
C
D
E
Flagged packet
Delay$_m$ = 7 > 6
Path Degradation
Message

Fig. 4

110a
110b
110c
110d
110e
A
B
C
D
E
Path Degradation Message
Extended Path Creation Message
Path Creation Answer
Path Under Investigation
Path Under Investigation
Path Changed
Path Changed

Fig. 5

110a
110b
110c
110d
110e
A
B
C
D
E
SID list
B,C, D, E
QoS
Delay <6
Extended Path Creation Message
Extended PCM
Extended PCM
Extended PCM
Delay$_m$ = 7 > 6
Flagged packet
Path Degradation Message
Path Under Investigation
Path Under Investigation
Extended Path Creation Message
Path Creation Answer
Path Changed
Path Changed
SID list
B,C, E
QoS
Delay <6
1
2
3
4
4

Fig. 6

700
Path Creation message
Source
Destination
$SID_1$
...
$SID_n$
$QoS_1$ ID
$QoS_1$ target
...
$QoS_m$ ID
$QoS_m$ target

Fig. 7

Path Degradation message
Source
Destination
$SID_{obs}$
$QoS_1$ ID
$Loss_1$
...
$QoS_m$ ID
$Loss_m$

800

Fig. 8

900
901
Receiving one or more data packets from a further network node upstream of the network node along the communication path
903
Estimating, based on the one or more data packets, at least one performance measure of the communication path
905
Sending a path degradation message to the upstream network node, in reaction to a degradation of the at least one performance measure of the communication path exceeding an allowed tolerance range, to cause the upstream network node to determine an alternative communication path for routing one or more further data packets to the destination network node

Fig. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20120044801 A1
- US 200302044587 A1
- EP 3598348 A1